# EUROPEAN PATENT SPECIFICATION

(11) **EP 2 071 429 B1**
(45) Date of publication and mention of the grant of the patent: **28.04.2010**
(21) Application number: 07123299.5
(22) Date of filing: 14.12.2007
(51) Int. Cl.: G06F 3/02

(54) **Handheld electronic device having a keypad portion that is movable with respect to another keypad portion**
Elektronisches Handgerät mit einem im Verhältnis zu einem anderen Tastaturteil beweglichen Tastaturteil
Dispositif électronique portable, ayant une portion de clavier mobile par rapport à une autre portion de clavier

(43) Date of publication of application: 17.06.2009
(73) Proprietor: Research In Motion Limited, Waterloo, Ontario N2L 3W8 (CA)
(72) Inventor: Griffin, Jason T., Kitchener Ontario N2P 2L3 (CA); Mousseau, Gary, Waterloo Ontario N2L 6M5 (CA)
(74) Representative: Phillips, Emily Elizabeth

(56) References cited:
- EP-A- 1 475 943
- EP-A- 1 862 882
- US-A1- 2005 054 393
- US-B2- 6 983 175

## Description

### BACKGROUND

### Field

The disclosed and claimed concept relates generally to handheld electronic devices and, more particularly, to a handheld electronic device having multiple keypad portions, with at least one keypad portion being movable with respect to another keypad portion.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

While handheld electronic devices have been generally effective for their intended purposes, such handheld electronic devices have not, however, been without limitation. By their very nature, handheld electronic devices typically are small and portable. As such, keys and other input members on handheld electronic devices typically have been both small and relatively few in number due to the relatively small area in which such input members can be provided. For instance, a full QWERTY keyboard can require ten keys in a top row, and in such a situations the keys of a handheld electronic device must be relatively small and/or the device must be relatively large. While certain devices have been known to be reconfigurable to provide, for example, a full QWERTY keyboard by reconfiguring the handheld electronic device, such handheld electronic devices typically have been large, heavy, and cumbersome to use. It thus would be desired to provide an improved handheld electronic device that overcomes these and other shortcomings.

EP1475943 discloses a portable communication apparatus having: a main housing having at least one curved step portion; a connection housing connected to the main housing in such a manner that the connection housing is rotatable about a first hinge axis, the connection housing having an antenna unit; a first rotatable housing connected to the connection housing in such a manner that the first rotatable housing is rotatable about a second hinge axis and can approach or move away from the main housing while being opposed to the main housing; and a second rotatable housing connected to the main housing in such a manner that the second rotatable housing is rotatable about a third hinge axis while being in contact with the main housing.

EP1862882 discloses a mobile device comprising a display portion and a keypad portion. The display portion has a front side that includes a display screen and a back side. The keypad portion is rotatably coupled to the display portion between a plurality of operational configurations. The keypad portion has a front side that includes a plurality of input devices and an outer edge, with the front side of the keypad portion having a depressed area surrounding and including an area where the keypad portion and display portion are rotatably coupled. At least one of the plurality of input devices is situated in the depressed area. The front side of the keypad portion and the front side of the display portion face in the same direction while rotating between the plurality of operational configurations. The plurality of operational configurations includes at least a first configuration and a second configuration.

US2005/0054393 discloses a moveable functional element such as a keyboard for use with a mobile communication device. The element is constructed in two wing portions. When the cover is swiveled between closed and opened positions, the wing portions move relative to the body of the device and the cover between two positions, a retracted position in which the functional element is hidden and an extended position in which the functional element of the device is exposed for normal use.

US 6,983,175 discloses a mobile station for receiving/transmitting information of every kind including at least one auxiliary keyboard having a plurality of auxiliary input keys therein, whereby the information is received/transmitted through the auxiliary input keys when a user wants to transmit the information by the mobile station. For that purpose, provided are a main body having a plurality of input keys mounted on an upper surface of the mobile station, a first and second assist keyboards being folded or unfolded centering around hinge joints, the key boards hinge-jointed rotationally on the opposite portions of both sides of the body to a horizontal direction, respectively, and a plurality of auxiliary input keys and on upper surfaces of the first and second auxiliary keyboards for inputting characters and numbers when the first and second auxiliary keyboards are unfolded from the body.

The invention is defined in the independent claims. Some optional features of the invention are defined in the dependent claims.

### BRIEF DESCRIPTION OF THE DRAWINGS

A full understanding of the disclosed and claimed concept can be gained from the following Description when read in conjunction with the accompanying drawings in which:

Fig. 1 is a front elevational view of an improved handheld electronic device in accordance with a first embodiment of the disclosed and claimed concept in an open, retracted configuration;

Fig. 2 is a schematic depiction of the handheld electronic device of Fig. 1;

Fig. 3 is a front elevational view of the handheld electronic device of Fig. 1 in an open, deployed configuration;

Fig. 4 is a front elevational view of a portion of the handheld electronic device of Fig. 1 partially cut away;

Fig. 5 is a right side elevational view of the handheld electronic device of Fig. 1;

Fig. 6 is a right side elevational view of the handheld electronic device of Fig. 3;

Fig. 7 is a front elevational view of an improved handheld electronic device in accordance with a second embodiment of the disclosed and claimed concept in an open, retracted configuration;

Fig. 8 is a front elevational view of the handheld electronic device of Fig. 7 in an open, deployed configuration;

Fig. 9 is a front elevational view of an improved handheld electronic device in accordance with a third embodiment of the disclosed and claimed concept in an open, retracted configuration;

Fig. 10 is a front elevational view of the handheld electronic device of Fig. 9 in an open, deployed configuration;

Fig. 11 is an exemplary home screen that can be visually output on a handheld electronic device;

Fig. 12 depicts an exemplary menu that can be output on a handheld electronic device;

Fig. 13 depicts another exemplary menu;

Fig. 14 depicts an exemplary reduced menu;

Fig. 15 is an output such as could occur during another exemplary text entry or text editing operation;

Fig. 16 is an output during another exemplary text entry operation;

Fig. 17 is an alternative output during the exemplary text entry operation of Fig. 16;

Fig. 18 is another output during another part of the exemplary text entry operation of Fig. 16; and

Fig. 19 is an exemplary output during a data entry operation.

Similar numerals refer to similar parts throughout the specification.

### DESCRIPTION

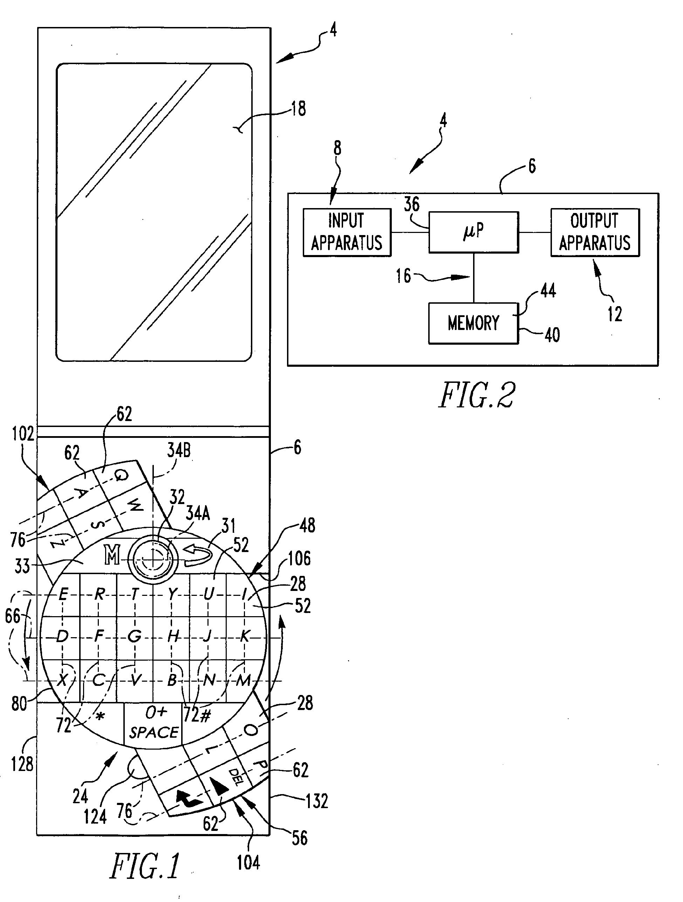

An improved handheld electronic device 4 is indicated generally in Figs. 1, 3, 5, and 6, and is depicted schematically in Fig. 2. The exemplary handheld electronic device 4 includes a housing 6 upon which are disposed an input apparatus 8, an output apparatus 12, and a processor apparatus 16. The handheld electronic device 4 is in the exemplary form of a two-piece body 20 that comprises a first member 22 and a second member 23. The second member 23 is movable with respect to the first member 22, such as in the fashion of a flip-phone, although this configuration is depicted herein for purposes of example only and is not meant to be limiting.

The input apparatus 8 is structured to provide input to the processor apparatus 16, and the output apparatus 12 is structured to receive output signals from the processor apparatus 16. The output apparatus 12 comprises a display 18 disposed on the second member 23 that is structured to provide visual output, although other output devices such as speakers, LEDs, tactile output devices, and so forth can be additionally or alternatively used.

As can be seen in Fig. 2, the processor apparatus 16 comprises a processor 36 and a memory 40. The processor 36 may be, for instance and without limitation, a microprocessor (µP) that is responsive to inputs from the input apparatus 8 and that provides output signals to the output apparatus 12. The processor 36 interfaces with the memory 40.

The memory 40 can be said to constitute a machine-readable medium and can be any one or more of a variety of types of internal and/or external storage media such as, without limitation, RAM, ROM, EPROM(s), EEPROM(s), FLASH, and the like that provide a storage register for data storage such as in the fashion of an internal storage area of a computer, and can be volatile memory or nonvolatile memory. The memory 40 has stored therein a number of routines 44 which are executable on the processor 36. As employed herein, the expression "a number of" and variations thereof shall refer broadly to any non-zero quantity, including a quantity of one. The routines 44 can be in any of a variety of forms such as, without limitation, software, firmware, and the like. The memory 40 also may have stored therein a dictionary and other linguistic data sources that are used by a disambiguation routine 44 to provide responses to ambiguous text inputs.

As can be understood from Fig. 1, the input apparatus 8 includes a keypad 24 and a multiple-axis input device which, in the exemplary embodiment depicted herein, is a track ball 32 that will be described in greater detail below. The keypad 24 comprises a plurality of keys 28, and it is noted that the keys 28 and the track ball 32 all serve as input members that are actuatable to provide input to the processor apparatus 16. The keypad 24 and the track ball 32 are advantageously disposed adjacent one another on a front face of the first member 22. This enables a user to operate the track ball 32 substantially without moving the user's hands away from the keypad 24 during a text entry operation or other operation.

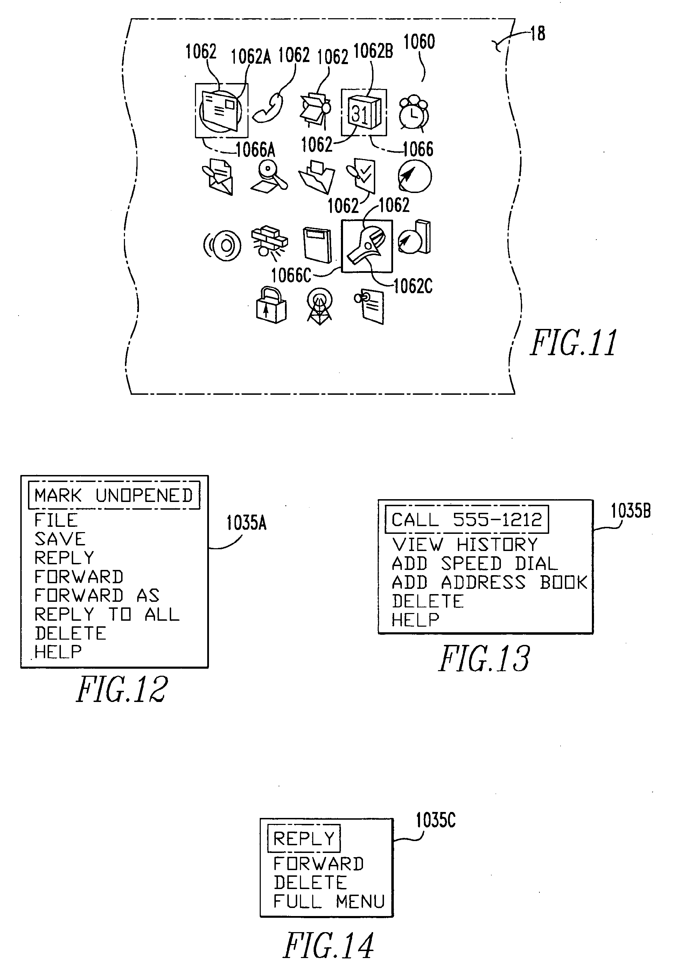

One of the keys 28 is an <ESCAPE> key 31 which, when actuated, provides to the processor apparatus 16 an input that undoes the action which resulted from the immediately preceding input and/or moves the user to a logically higher position within a logical menu tree managed by a graphical user interface (GUI) routine 44. The function provided by the <ESCAPE> key 31 can be used at any logical location within any portion of the logical menu tree except, perhaps, at a home screen such as is depicted in Fig. 11. The <ESCAPE> key 31 is advantageously disposed adjacent the track ball 32 thereby enabling, for example, an unintended or incorrect input from the track ball 32 to be quickly undone, i.e., reversed, by an actuation of the adjacent <ESCAPE> key 31.

Another of the keys 28 is a <MENU> key 33 which, when actuated, provides to the processor apparatus 16 an input that causes the GUI 44 to generate and output on the display 18 a menu such as is depicted in Fig 11. Such a menu is appropriate to the user's current logical location within the logical menu tree, as will be described in greater detail below.

While in the depicted exemplary embodiment the multiple-axis input device is the track ball 32, it is noted that multiple-axis input devices other than the track ball 32 can be employed without departing from the present concept. For instance, other appropriate multiple-axis input devices could include mechanical devices such as joysticks and the like and/or non-mechanical devices such as touch pads, track pads and the like and/or other devices which detect motion or input in other fashions, such as through the use of optical sensors or piezoelectric crystals.

The track ball 32 is freely rotatable in all directions with respect to the housing 6. A rotation of the track ball 32 a predetermined rotational distance with respect to the housing 6 provides an input to the processor apparatus 16, and such inputs can be employed by the routines 44, for example, as navigational inputs, scrolling inputs, selection inputs, and other inputs.

For instance, and as can be seen in Fig. 1, the track ball 32 is rotatable about a horizontal axis 34A to provide vertical scrolling, navigational, selection, or other inputs. Similarly, the track ball 32 is rotatable about a vertical axis 34B to provide horizontal scrolling, navigational, selection, or other inputs. Since the track ball 32 is freely rotatable with respect to the housing 6, the track ball 32 is additionally rotatable about any other axis (not expressly depicted herein) that lies within the plane of the page of Fig. 1 or that extends out of the plane of the page of Fig. 1.

The track ball 32 can be said to be a multiple-axis input device because it provides scrolling, navigational, selection, and other inputs in a plurality of directions or with respect to a plurality of axes, such as providing inputs in both the vertical and the horizontal directions. It is reiterated that the track ball 32 is merely one of many multiple-axis input devices that could be employed on the handheld electronic device 4. As such, mechanical alternatives to the track ball 32, such as a joystick, might have a limited rotation with respect to the housing 6, and non-mechanical alternatives might be immovable with respect to the housing 6, yet all are capable of providing input in a plurality of directions and/or along a plurality of axes.

The track ball 32 additionally is translatable toward the housing 6, i.e., into the plane of the page of Fig. 1, to provide additional inputs. The track ball 32 could be translated in such a fashion by, for example, a user applying an actuating force to the track ball 32 in a direction toward the first member 22, such as by pressing on the track ball 32. The inputs that are provided to the processor apparatus 16 as a result of a translation of the track ball 32 in the indicated fashion can be employed by the routines 44, for example, as selection inputs, delimiter inputs, or other inputs.

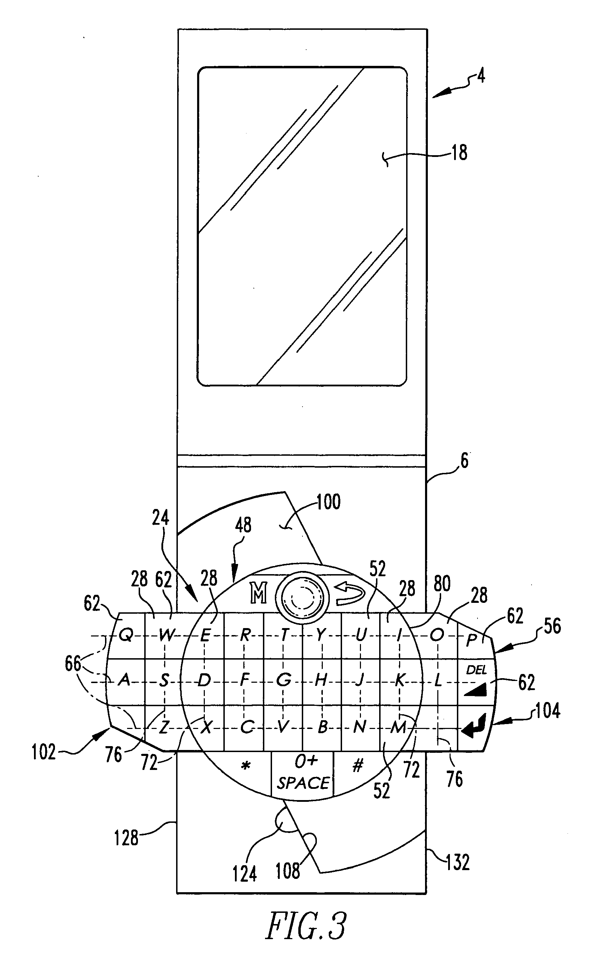

As can be understood from Figs. 1 and 3, the keypad 24 comprises a first keypad portion 48 comprising a plurality of first keys 52 and a second keypad portion 56 comprising a plurality of second keys 62. The second keypad portion 56 is movable between a first position with respect to the first keypad portion 48, such as is depicted generally in Fig. 1, and a second position with respect to the first keypad portion 48, such as is depicted generally in Fig. 3. In the second position, the first and second keypad portions 48 and 56 are operable together as a single keyboard, i.e., the keypad 24. In the first position, at least the first keys 52 are operable, although in certain circumstances the second keys 62 may additionally be operable in the first position.

The first keys 52 of the first keypad portion 48 are arranged in a plurality of rows 66 that extend generally parallel with the horizontal axis 34A, and are further arranged in a plurality of first columns 72 that extend generally parallel with the vertical axis 34B. The second keys 62 of the second keypad portion 56 are arranged in a plurality of second columns 76 which, in the second position, are disposed adjacent and parallel with at least some of the first columns 72. Moreover, in the second position the second keys 62 are aligned with the rows 66 of the first keys 56 and effectively become integrated into the rows 66. That is, in the second position the rows 66 extend across the first keys 52 and the second keys 62.

The first keypad portion 48 includes in arcuate boundary 80 along which the second keypad portion 56 moves when moving between the first and second positions. On either side of the first keypad portion 48, a plurality of the first keys 52 are disposed adjacent one another in an outboard first column 72 along a portion of the arcuate boundary 80. An inboard second column 76 of the second keys 62 is disposed adjacent each such outboard first column 72 to enable the first and second keypad portions 48 and 52 to be disposed adjacent one another and to together form a single keyboard, i.e., the keypad 24, when the second keypad portion 56 is in its second position. That is, a plurality of the first keys 52 are each disposed laterally adjacent a second key 62 in the same row 66 in the second position.

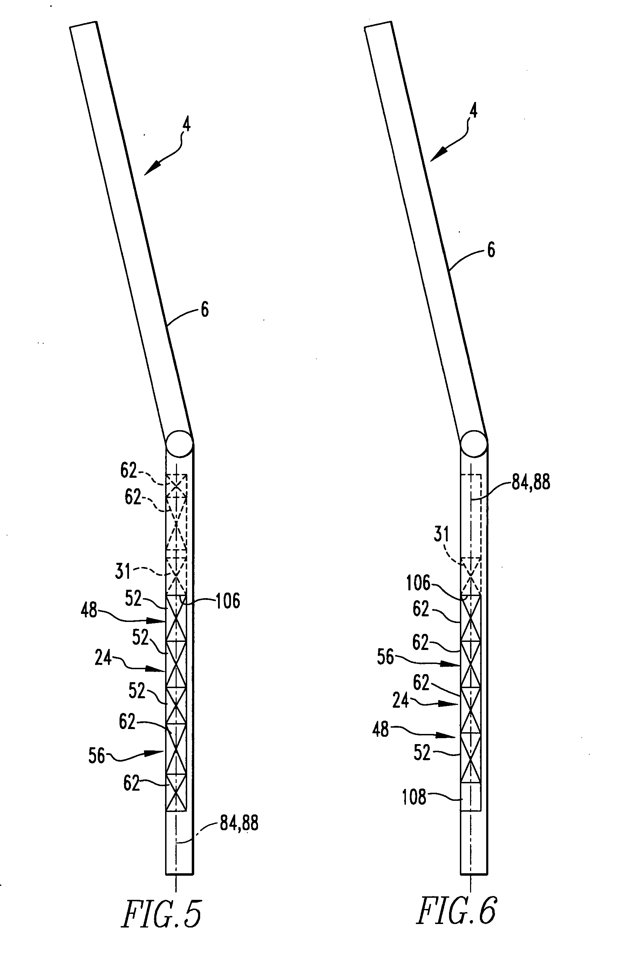

As can be understood from Fig. 5, the first keys 52 are disposed within a first plane 84, and thus the first keypad portion 48 is disposed in the first plane 84. As can be understood from Figs. 5 and 6, the second keys 62 are disposed in a second plane 88 that is coplanar with the first plane 84. That is, in the exemplary embodiment the first and second keys 52 and 62, and thus the keypad 24 as a whole, are disposed within a single plane that includes the first and second planes 84 and 88. Such a planar configuration further contributes to the keypad 24 being operable as a complete unit, i.e., a full keyboard, in the second position.

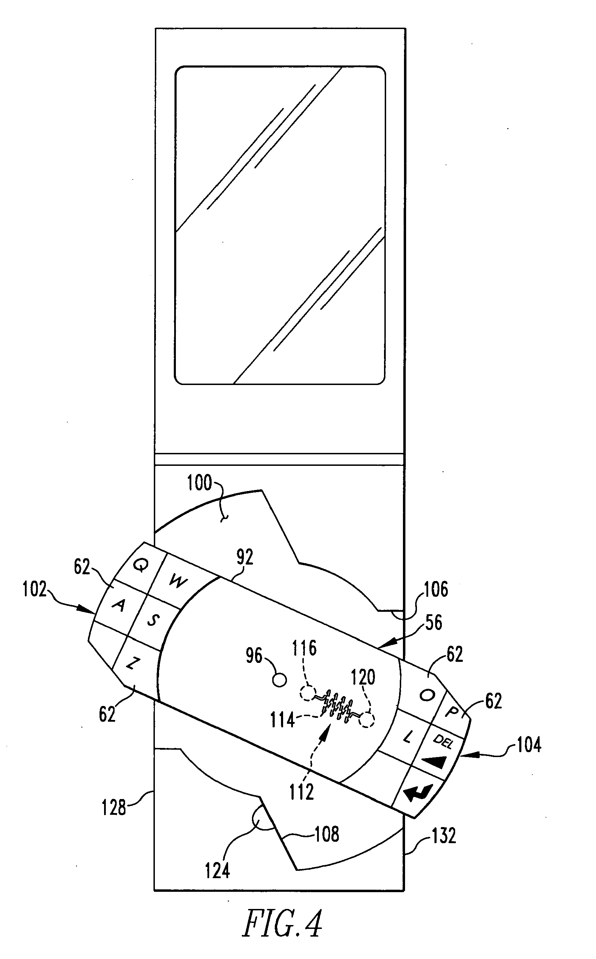

Fig. 4 depicts the first member 22 after having the first keypad portion 48, the track ball 32, the escape key 31, and the menu key 33 removed therefrom. It can be seen that the second keys 62 are disposed upon a movable support 92 that is pivotably disposed in a recessed region 100 of the first member 22, with the support 92 being pivotable about a pivot 96. The second keys 62 can be said to be arranged as a set of leftward second keys 102 and a set of rightward second keys 104 that are each disposed in a number of second columns 76 disposed at opposite ends of the support 92. It can be understood from Fig. 3 that in the second position the leftward second keys 102 and the rightward second keys 104 are disposed at opposite sides of the first keypad portion 48.

In moving between the first and second positions, the second keys 62 move on the support 92 along an arcuate path of movement that is adjacent the arcuate boundary 80 of the first keypad portion 48 and is disposed within the second plane 88. The second keypad portion 56 is depicted in Fig. 4 as being disposed between the first and second positions. In the first position, the second keypad portion 56 is disposed against a stop 108 of the recessed region 100 and is generally in a retracted configuration. In the second position the second keypad portion 56 is disposed against another stop 106 and is generally in a deployed configuration.

The second keypad portion 56 is depicted herein as moving generally in a counter-clockwise direction with respect to the first keypad portion 48 when moving from the retracted configuration toward the deployed configuration. It is understood, however, that other embodiments of the handheld electronic device can be arranged such that a second keypad portion moves generally in a clockwise direction with respect to a first keypad portion when moving from a retracted configuration toward a deployed configuration.

Any of a variety of mechanisms and structures can be employed in moving the second keypad portion 56 between the first and second positions and maintaining the second keypad portion 56 at the first and/or second positions. For example, the second keypad portion 56 could be biased to either the first position or second position and could have a latch mechanism to retain it at the opposite of the first or second positions, respectively. However, in the exemplary embodiment depicted herein, the keypad 24 comprises a biasing system 112 that biases the second keypad portion 56 to both the first and second positions, i.e., it is biased to both the retracted and deployed configurations. Such a system can be provided by employing an over-centering spring system.

For instance, the biasing system 112 includes a spring 114 that extends between a first mount 116 disposed on the first member 22 and a second mount 122 disposed on the support 92. The support 92 is depicted in Fig. 4 as being at a position of maximum tension in the spring 114. Slight further movement of the second keypad portion 56 toward the first position will result in the tension in the spring 114 biasing the second keypad portion 56 toward the first position against the stop 108. Similarly, any further motion of the second keypad portion 56 from its position in Fig. 4 toward the second position will result in the tension in the spring 114 biasing the second keypad portion 56 toward the second position against the stop 106. As such, the biasing system 112 enables the second keypad portion 56 to be biased toward both the first and second positions at different times depending upon the rotational position of the second keypad portion 56 being slightly closer toward one of the first and second positions than to the other of the first and second positions. It is understood, however, that the biasing system 112 depicted in Fig. 4 is exemplary only, and it is further understood that similar results can be accomplished in any of a variety of different fashions within the scope of the present concept.

In moving the second keypad portion 56 from the first position to the second portion, a user would dispose a finger in a finger relief 124 formed in the first member 22 and apply a force to the second keypad portion 56 to pivot the second keypad portion 56 in the counter-clockwise direction from the perspective of Fig. 4 to overcome the bias of the biasing system 112 until the second keypad portion 56 has moved in the counter-clockwise direction beyond the position depicted generally in Fig. 4. At such moment, the biasing system 112 will automatically bias the second keypad portion 56 toward the stop 106, and the second keypad portion 56 will therefore automatically reach the second position, as is depicted generally in Fig. 3. In moving the second keypad portion 56 from the second position to the first position, the user will apply a force in the clockwise direction from the perspective of Fig. 4 to a laterally protruding portion of the second keypad portion 56 to overcome the bias thereof by the biasing system 112 and to pivot the second keypad portion 56 toward the second position. Once such clockwise movement has moved the second keypad portion 56 in the clockwise direction slightly past the position depicted generally in Fig. 4, the biasing system 112 will bias the second keypad portion 56 toward the stop 108, and the second keypad portion 56 will thus automatically reach the first position.

As such, a user can quickly move the second keypad portion 56 between the first and second positions by applying a slight force in a rotational direction to pivot the second keypad portion 56 to roughly the midpoint of the path of motion between the first and second positions, and the biasing system 112 will thereafter bias the second keypad portion 56 in the desired direction until either the first or second position is reached. For example, the user can supplement the first keypad portion 48 with the second keypad portion 56 by merely applying a slight counter-clockwise force to the second keypad portion 56. The user need not turn the handheld electronic device 4 on its side or upside down, etc., any of which would require at least a small amount of thought on the part of the user. The operation of the handheld electronic device to move the second keypad portion 56 between the first and second positions thus requires less thought from the user and accordingly facilitates moving from the keypad 24 from the partial keypad configuration of Fig. 1 to the full keypad configuration of Fig. 3. Moreover, rotational movements by the hand are ergonomically more desirable than, for instance, motions in straight lines and the like.

The first member 22 can be said to include a lateral surface 128 generally disposed at the left of the first keypad portion 48 and another lateral surface 132 generally disposed at the right of the first keypad portion 48, from the perspective of Figs. 1 and 3. In the first position the outermost edges of the second keypad portion 56 are at most disposed flush with the lateral surfaces 128 and 132 and more likely are disposed slightly inboard of the lateral surfaces 128 and 132. However, in the second position the leftward second keys 102 and the rightward second keys 104 protrude outwardly beyond the lateral surfaces 128 and 132, respectively.

As can be understood from Figs. 1 and 3, movement of the second keys 62 between the first and second positions, is along a circular path, i.e., a path of fixed radius, that is less than ninety degrees, i.e., 90°. That is, the arcuate path between the first and second positions can be said to subtend an acute angle, i.e., and angle of less than ninety degrees. The path of movement thus is angularly relatively short and thus can easily be made by most users with a single movement of the hand about the wrist. Moreover, and as suggested above, the over-centering spring system employed by the biasing system 112 essentially enables a movement between the first and second positions of the second keypad portion 56 to be accomplished by pivoting the second keypad portion 56 slightly more than halfway from one of the first and second positions toward the other of the first and second positions, with the biasing system 112 moving the second keypad portion 56 the balance of the distance.

In the second position, the second keys 62 are disposed laterally to the first keypad portion 48, i.e., the second keys 62 are disposed at positions along the horizontal axis 34A in an outward direction from the first keypad portion 48. Also, in the second position the second keys 62 protrude outwardly beyond the lateral surfaces 128 and 132. In the first position, however, the second keys 62 are disposed generally above and below the first keypad portion 48, i.e., the second keys 62 are disposed in the general direction of the vertical axis 34B albeit offset from directly vertical positions. In the first position, the second keys 62 do not protrude outwardly beyond the lateral surfaces 128 and 132, and rather are at most flush with the lateral surfaces 128 and 132 if not being at least slightly inboard thereof.

In this regard, it can be seen that the keyboard system presented herein is especially suited to handheld electronic devices having a "portrait" type of aspect ratio, i.e., one wherein the physical dimension in the vertical direction, i.e., the physical dimension parallel with the vertical axis 34B, is greater than that in the horizontal direction, i.e., the physical dimension parallel with the horizontal axis 34A. Such an aspect ratio advantageously contributes to the ability of the second keys 62 in a retracted configuration to be disposed at positions above and below the first keypad portion 48 and to be flush or slightly inboard of the lateral surfaces 128 and 132 of the first member 22. When the second keypad portion 56 is desired to be deployed, however, the second keys 62 can be moved from their position generally above and below the first keypad portion 48 in a non-protruding position to a deployed configuration wherein the second keys 62 in large part protrude outwardly in a lateral direction from the first keypad portion 48. While it is understood that the keypad system described herein is particularly well suited to devices having a "portrait" type aspect ratio, it can be employed on virtually any type of handheld electronic device.

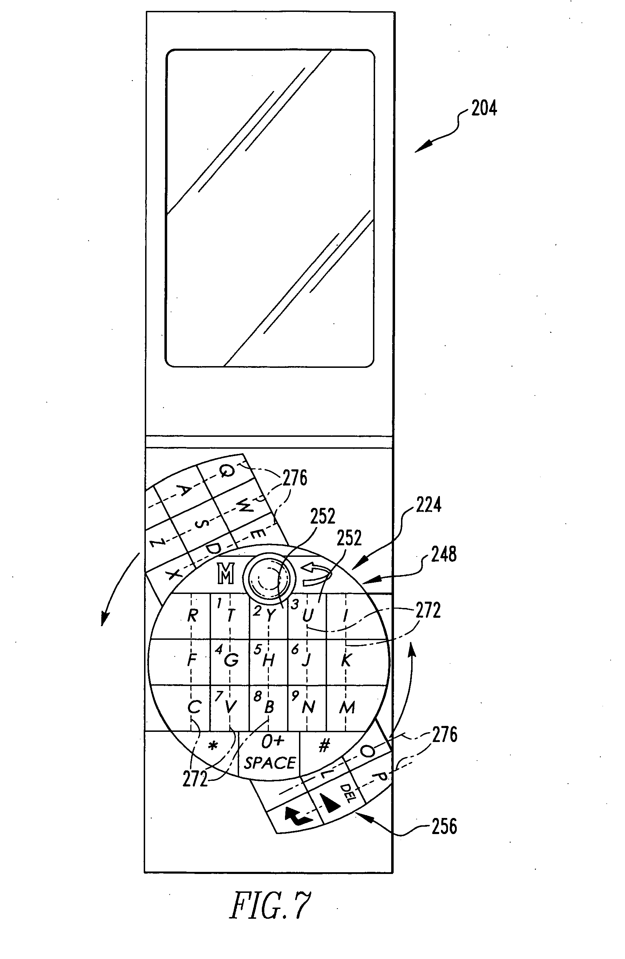

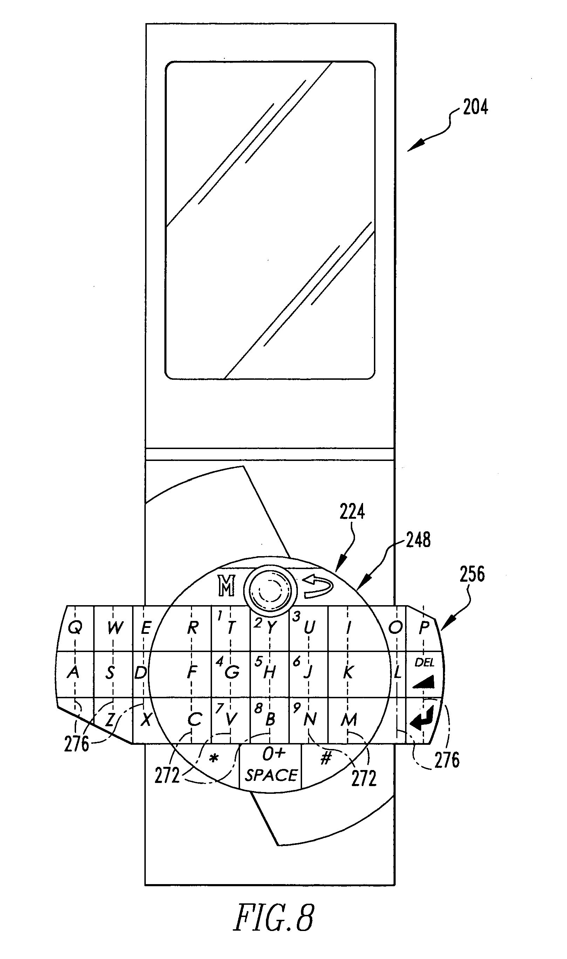

An improved handheld electronic device in accordance with a second embodiment of the disclosed and claimed concept is depicted generally in Figs. 7 and 8. The handheld electronic device 204 is similar to the handheld electronic device 4 except that it has a differently configured keypad 224. Specifically, a first keypad portion 248 has keys arranged in five first columns 272, and a second keypad portion 256 has keys arranged in a total of five second columns 276. In the exemplary form depicted herein, the second keypad portion 256 in the second position provides three second columns 276 disposed at the left of the first keypad portion 248 from the perspective of Fig. 8, and further provides two second columns 276 disposed at the right of the first keypad portion 248. In this regard, it can be seen that the second keypad portion 256 provides a quantity of second columns 276 at one side thereof that is different than the quantity of second columns 276 at an opposite side thereof. Thus, it can be seen that the quantity of second columns 276 provided at opposite sides of the second keypad portion 256 need not be equal in quantity. Moreover, it can be seen from Figs. 7 and 8 that the total quantity of second columns 276 is equal to the quantity of first columns 272, i.e., five in each case. It is noted that the second keypad portion of other embodiments could have a quantity of second columns greater than the quantity of first columns without departing from the scope of the present concept.

As can further be seen from Figs. 7 and 8, some of the first keys 252 are alphanumeric, that is, the first keys 252 in the central three first columns 272 have both a Latin letter and an Arabic digit assigned thereto. The digits, along with the pound symbol, i.e., #, and the asterisk symbol, i.e., *, are arranged generally in the layout of a conventional touch-tone telephone keypad. The handheld electronic device 204 thus could have available thereon a telephone routine 44 wherein an actuation of any of the first keys 252 having a digit assigned will be detected and processed as a keystroke of a telephone keypad.

It is noted that for the sake of simplicity each of the keys of the first keypad portion 248 are depicted as having at most a single Latin letter assigned thereto. It is understood that each such key in the five first columns 272 could actually have two Latin letters assigned thereto and be in the form of a reduced QWERTY keyboard. For instance, the key which is depicted in Figs. 7 and 8 as having the letter "F" assigned thereto could additionally or alternatively have assigned thereto the letters "A" and "S". A disambiguation routine 44 could be operable on the handheld electronic device 204 to interpret as an ambiguous input an actuation of such a key as part of an ambiguous input from the first keypad portion 248. That is, the letter "F" assigned to this particular key could be the operable letter assigned to such key when the second keypad portion 256 is in the second position, thereby making the keypad 224 a full QWERTY keypad. However, when the second keypad portion 256 is in the first position, i.e., in the retracted configuration, the disambiguation routine 44 could be automatically activated on the handheld electronic device 204 and would interpret an actuation of such a key not as an "F" but rather as an "A" or an "S" in the context of an ambiguous input from the first keypad 248.

From the handheld electronic devices 4 and 104, it can be understood that numerous different types of keypad layouts can be provided within the scope of the present concept. For instance, an alternate handheld electronic device could have a first keypad portion having four first columns and a second keypad portion having two sets of three columns of keys for a total of ten columns of keys in the deployed configuration. Alternatively, a first keypad portion could have three columns of keys, and a second keypad portion could have two second columns of keys, with one second column being disposed at each side of the first keypad portion for a total of five columns in the deployed configuration. In such a situation, the routines might alternate between a telephone routine when the second keypad portion is in a retracted configuration and a disambiguation routine when the second keypad portion is in a deployed configuration. In still another embodiment, the first keypad portion could have three columns, but the second keypad portion could have a total of eight columns with four second columns being disposed at each side of the first keypad portion in the deployed configuration for a total of eleven columns of keys. Such a configuration could provide an extra row of keys, such as at the left or right of a ten-column keypad, for special function keys such as dedicated symbol keys, convenience keys, special operation keys, and the like. In a variation on this last embodiment, an additional alternate embodiment could have a first keypad portion having five first columns of keys and could have a second keypad portion having a total of six second columns of keys, with three second columns being disposed at each of the two sides of the first keypad portion for again a total of eleven columns of keys in the deployed configuration, with one column being used for extra functions, etc. Other examples will be apparent.

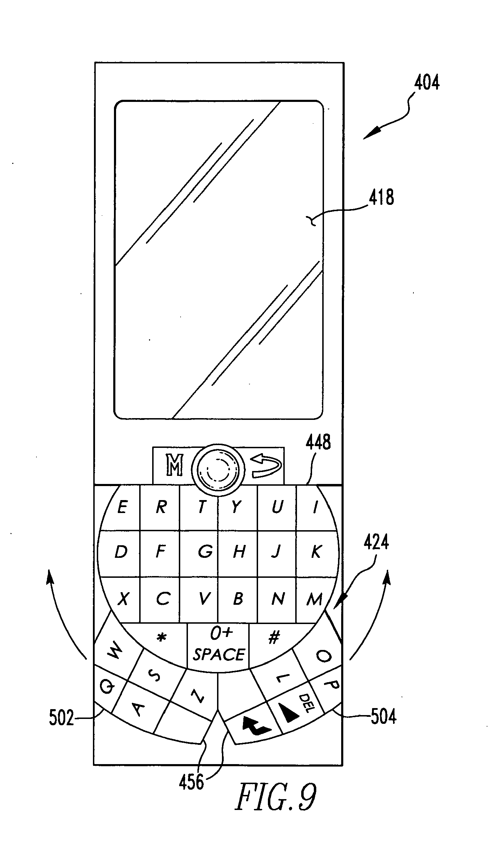

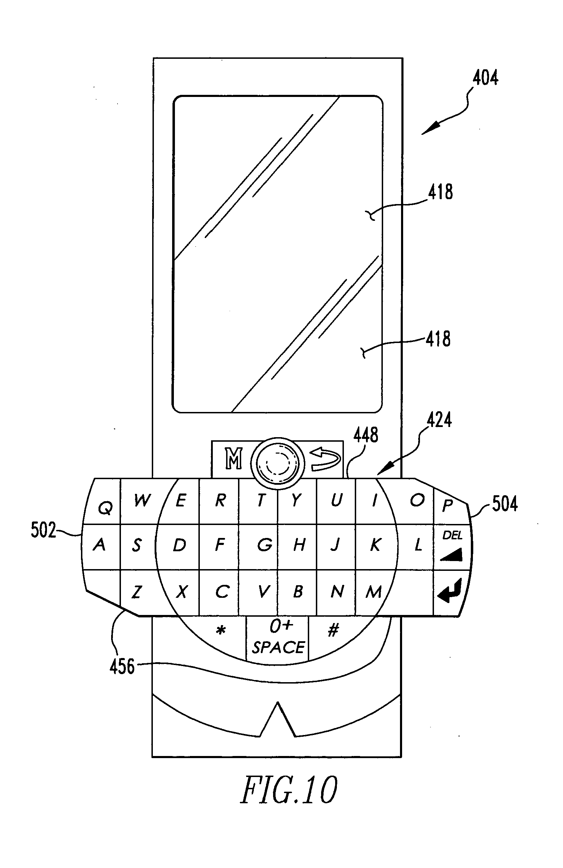

An improved handheld electronic device in accordance with a third embodiment of the disclosed and claimed concept is indicated generally at the numeral 404 in Figs. 9 and 10. The handheld electronic device 404 is similar to the handheld electronic devices 4 and 204, except that its keypad 424 has, in addition to a first keypad portion 448, a second keypad portion 456 that is split into two separate components. That is, the second keypad portion 456 has a leftward second keyset 502 and a rightward second keyset 504 that are movable between a first position, such as is depicted generally in Fig. 9, and a second position, such as is depicted generally in Fig. 10. In the first position, i.e., the retracted configuration, the leftward and rightward second keysets 502 and 504 are disposed generally below the first keypad portion 448. In the second position, i.e., the deployed configuration, the leftward keyset 502 is disposed laterally at the left of the first keypad portion 448, and the rightward second keyset 504 is disposed laterally at the right of the first keypad portion 448 from the perspective of Fig. 10. Thus, in the first position the leftward and rightward second keysets 502 and 504 are disposed below the first keypad portion 448, i.e., to the south from the perspective of Fig. 9, rather than having certain of the second keys be disposed below the first keypad portion 448 and certain other of the second keys being disposed above it. Such a configuration enables the handheld electronic device 404 to have its display 418 disposed closely adjacent the keypad 424 rather than having the display disposed on a separate member, such as would be the case with a flip-phone configuration.

It can be seen that in moving from the first position of Fig. 9 to the second position of Fig. 10, the leftward and rightward second keysets 502 and 504 move in opposite directions about the arcuate boundary of the first keypad portion 448 to their second position disposed at opposite sides of the first keypad portion 448. Such a configuration can be accomplished by mounting the leftward and rightward second keysets 502 and 504 to separate supports that are movable with respect to the first keypad portion 448. The leftward and rightward second keysets 502 and 504 can be double-biased, such as by using a biasing system similar to the biasing system 112 above, that relies upon an over-centering spring system. The leftward and rightward second keysets 502 and 504 can be configured to be movable independent of one another or alternatively could be configured to be mechanically connected with one another and thus to move together between the first and second positions.

All of the aforementioned embodiments of first and second keypad portions described above can be implemented in the fashion depicted in Figs. 9 and 10 without departing from the present concept. Moreover, the configuration of Figs. 9 and 10 can be implemented in a flip-phone device without departing from the present concept.

An exemplary home screen output that can be visually output on the display of any of the handheld electronic devices 4, 204, and 404 is depicted in Fig. 11 as including a plurality of icons 1062 that are selectable by the user for the purpose of, for example, initiating the execution on the processor apparatus 16 of a routine 44 that is represented by an icon 1062. The track ball is rotatable to provide, for example, navigational inputs among the icons 1062. It is noted that while some the following discussion may be expressed in terms of the handheld electronic device 4 for the sake of simplicity, it is understood that the discussion is equally applicable to the handheld electronic device 204 and 404, for example.

Fig. 11 depicts the travel of an indicator 1066 from the icon 1062A, as is indicated in broken lines with the indicator 1066A, to the icon 1062B, as is indicated in broken lines with the indicator 1066B, and onward to the icon 1062C, as is indicated by the indicator 1066C. It is understood that the indicators 1066A, 1066B, and 1066C are not necessarily intended to be simultaneously depicted on the display 18, but rather are intended to together depict a series of situations and to indicate movement of the indicator 1066 among the icons 1062. The particular location of the indicator 1066 at any given time indicates to a user the particular icon 1062, for example, that is the subject of a selection focus of the handheld electronic device 4. Whenever an icon 1062 or other selectable object is the subject of the selection focus, a selection input to the processor apparatus 16 will result in execution or initiation of the routine 44 or other function that is represented by the icon 1062 or other selectable object.

The movement of the indicator 1066 from the icon 1062A, as indicated with the indicator 1066A, to the icon 1062B, as is indicated by the indicator 1066B, was accomplished by rotating the track ball 32 about the vertical axis 34B to provide a horizontal navigational input. As mentioned above, a rotation of the track ball 32 a predetermined rotational distance results in an input to the processor apparatus 16. In the present example, the track ball 32 would have been rotated about the vertical axis 34B a rotational distance equal to three times the predetermined rotational distance since the icon 62B is disposed three icons 1062 to the right the icon 1062A. Such rotation of the track ball 32 likely would have been made in a single motion by the user, but this need not necessarily be the case.

Similarly, the movement of the indicator 1066 from the icon 1062B, as indicated by the indicator 1066B, to the icon 1062C, as is indicated by the indicator 1066C, was accomplished by the user rotating the track ball 32 about the horizontal axis 34A to provide a vertical navigational input. In so doing, the track ball 32 would have been rotated a rotational distance equal to two times the predetermined rotational distance since the icon 1062C is disposed two icons 1062 below the icon 1062B. Such rotation of the track ball 32 likely would have been made in a single motion by the user, but this need not necessarily be the case.

It thus can be seen that the track ball 32 is rotatable in various directions to provide various navigational and other inputs to the processor apparatus 16. Rotational inputs by the track ball 32 typically are interpreted by whichever routine 44 is active on the handheld electronic device 4 as inputs that can be employed by such routine 44. For example, the GUI 44 that is active on the handheld electronic device 4 in Fig. 11 requires vertical and horizontal navigational inputs to move the indicator 1066, and thus the selection focus, among the icons 1062. If a user rotated the track ball 32 about an axis oblique to the horizontal axis 34A and the vertical axis 34B, the GUI 44 likely would resolve such an oblique rotation of the track ball 32 into vertical and horizontal components which could then be interpreted by the GUI 44 as vertical and horizontal navigational movements, respectively. In such a situation, if one of the resolved vertical and horizontal navigational movements is of a greater magnitude than the other, the resolved navigational movement having the greater magnitude would be employed by the GUI 44 as a navigational input in that direction to move the indicator 1066 and the selection focus, and the other resolved navigational movement would be ignored by the GUI 44, for example.

When the indicator 1066 is disposed on the icon 1062C, as is indicated by the indicator 1066C, the selection focus of the handheld electronic device 4 is on the icon 1062C. As such, a translation of the track ball 32 toward the first member 22 as described above would provide an input to the processor apparatus 16 that would be interpreted by the GUI 44 as a selection input with respect to the icon 1062C. In response to such a selection input, the processor apparatus 16 would, for example, begin to execute a routine 44 that is represented by the icon 1062C. It thus can be understood that the track ball 32 is rotatable to provide navigational and other inputs in multiple directions, assuming that the routine 44 that is currently active on the handheld electronic device 4 can employ such navigational or other inputs in a plurality of directions, and can also be translated to provide a selection input or other input.

As mentioned above, Fig. 12 depicts an exemplary menu 1035A that would be appropriate if the user's current logical location within the logical menu tree was viewing an email within an email routine 44. That is, the menu 1035A provides selectable options that would be appropriate for a user given that the user is, for example, viewing an email within an email routine 44. In a similar fashion, Fig. 13 depicts another exemplary menu 1035B that would be depicted if the user's current logical location within the logical menu tree was within a telephone routine 44.

Rotational movement inputs from the track ball 32 could be employed to navigate among, for example, the menus 1035A and 1035B. For instance, after an actuation of the <MENU> key 33 and an outputting by the GUI 44 of a resultant menu, the user could rotate the track ball 32 to provide scrolling inputs to successively highlight the various selectable options within the menu. Once the desired selectable option is highlighted, i.e., is the subject of the selection focus, the user could translate the track ball 32 toward the housing 6 to provide a selection input as to the highlighted selectable option. In this regard, it is noted that the <MENU> key 33 is advantageously disposed adjacent the track ball 32. This enables, for instance, the generation of a menu by an actuation the <MENU> key 33, conveniently followed by a rotation the track ball 32 to highlight a desired selectable option, for instance, followed by a translation of the track ball 32 toward the housing 6 to provide a selection input to initiate the operation represented by the highlighted selectable option.

It is further noted that one of the additional inputs that can be provided by a translation of the track ball 32 is an input that causes the GUI 44 to output a reduced menu. For instance, a translation of the track ball 32 toward the housing 6 could result in the generation and output of a more limited version of a menu than would have been generated if the <MENU> key 33 had instead been actuated. Such a reduced menu would therefore be appropriate to the user's current logical location within the logical menu tree and would provide those selectable options which the user would have a high likelihood of selecting. Rotational movements of the track ball 32 could provide scrolling inputs to scroll among the selectable options within the reduced menu 1035C, and translation movements of the track ball 32 could provide selection inputs to initiate whatever function is represented by the selectable option within the reduce menu 1035C that is currently highlighted.

By way of example, if instead of actuating the <MENU> key 33 to generate the menu 1035A the user translated the track ball 32, the GUI 44 would generate and output on the display the reduced menu 1035C that is depicted generally in Fig. 14. The exemplary reduced menu 1035C provides as selectable options a number of the selectable options from the menu 1035A that the user would be most likely to select. As such, a user seeking to perform a relatively routine function could, instead of actuating the <MENU> key 33 to display the full menu 1035A, translate the track ball 32 to generate and output the reduced menu 1035C. The user could then conveniently rotate the track ball 32 to provide scrolling inputs to highlight a desired selectable option, and could then translate the track ball 32 to provide a selection input which would initiate the function represented by the selectable option in the reduced menu 1035C that is currently highlighted.

In the present exemplary embodiment, many of the menus that could be generated as a result of an actuation of the <MENU> key 33 could instead be generated and output in reduced form as a reduced menu in response to a translation of the track ball 32 toward the housing 6. It is noted, however, that a reduced menu might not be available for each full menu that could be generated from an actuation of the <MENU> key 33. Depending upon the user's specific logical location within the logical menu tree, a translation of the track ball 32 might be interpreted as a selection input rather than an input seeking a reduced menu. For instance, a translation of the track ball 32 on the home screen depicted in Fig. 1 would result in a selection input as to whichever of the icons 1062 is the subject of the input focus. If the <MENU> key 33 was actuated on the home screen, the GUI 44 would output a menu appropriate to the home screen, such as a full menu of all of the functions that are available on the handheld electronic device 4, including those that might not be represented by icons 1062 on the home screen.

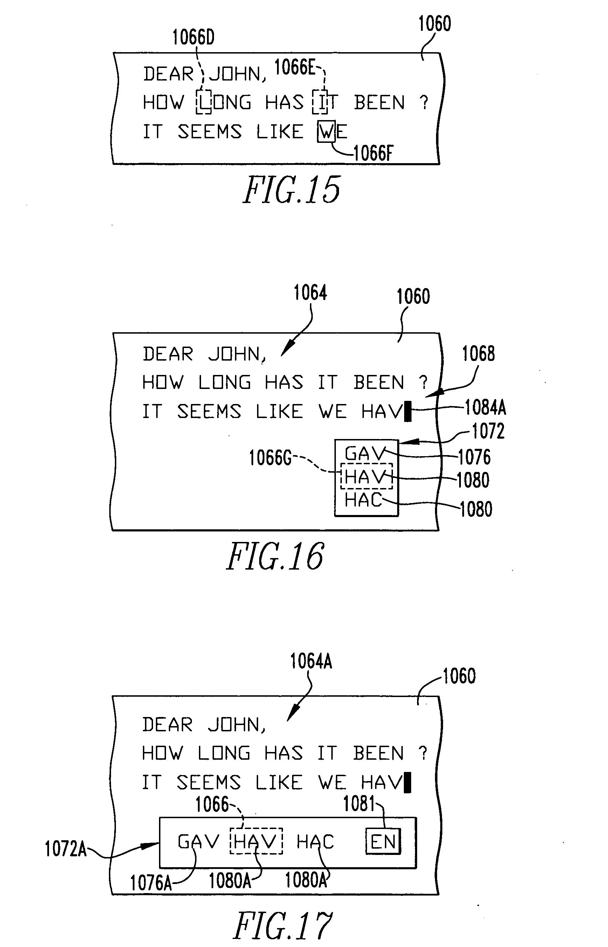

Fig. 15 depicts a quantity of text that is output on the display 18, such as during a text entry operation or during a text editing operation, for example. The indicator 1066 is depicted in Fig. 15 as being initially over the letter "L", as is indicated with the indicator 1066D, and having been moved horizontally to the letter "I", as is indicated by the indicator 1066E, and thereafter vertically moved to the letter "W", as is indicated by the indicator 1066F. In a fashion similar to that in Fig. 11, the cursor 1066 was moved among the letters "L", "I", and "W" through the use of horizontal and vertical navigational inputs resulting from rotations of the track ball 32. In the example of Fig. 15, however, each rotation of the track ball 32 the predetermined rotational distance would move the indicator 1066 to the next adjacent letter. As such, in moving the indicator 1066 between the letters "L" and "I," the user would have rotated the track ball 32 about the vertical axis 1034B a rotational distance equal to nine times the predetermined rotational distance, for example, since "I" is disposed nine letters to the right of "L".

Fig. 16 depicts an output 1064 on the display 18 during, for example, a text entry operation that employs the disambiguation routine 44. The output 1064 can be said to comprise a text component 1068 and a variant component 1072. The variant component 1072 comprises a default portion 1076 and a variant portion 1080. Fig. 16 depicts the indicator 1066G on the variant 1080 "HAV", such as would result from a rotation of the track ball 32 about the horizontal axis 34A to provide a downward vertical scrolling input. In this regard, it is understood that a rotation of the track ball 32 a distance equal to the predetermined rotational distance would have moved the indicator 1066 from a position (not expressly depicted herein) disposed on the default portion 1076 to the position disposed on the first variant 1080, as is depicted in Fig. 16. Since such a rotation of the track ball 32 resulted in the first variant 1080 "HAV" being highlighted with the indicator 1066G, the text component 1068 likewise includes the text "HAV" immediately preceding a cursor 1084A.

Fig. 17 depict an alternative output 1064A having an alternative variant component 1072A having a default portion 1076A and a variant portion 1080A. The variant component 1072A is horizontally arranged, meaning that the default portion 1076A and the variants 1080A are disposed horizontally adjacent one another and can be sequentially selected by the user through the use of horizontal scrolling inputs, such as by the user rotating the track ball 32 the predetermined rotational distance about the vertical axis 34B. This is to be contrasted with the variant component 1072 of Fig. 16 wherein the default portion 1076 and the variants 1080 are vertically arranged, and which can be sequentially selected by the user through the user of vertical scrolling inputs with the track ball 32.

In this regard, it can be understood that the track ball 32 can provide both the vertical scrolling inputs employed in conjunction with the output 1064 as well as the horizontal scrolling inputs employed in conjunction with the output 1064A. For instance, the disambiguation routine 44 potentially could allow the user to customize the operation thereof by electing between the vertically arranged variant component 1072 and the horizontally arranged variant component 1072A. The track ball 32 can provide scrolling inputs in the vertical direction and/or the horizontal direction, as needed, and thus is operable to provide appropriate scrolling inputs regardless of whether the user chooses the variant component 1072 or the variant component 1072A. That is, the track ball 32 can be rotated about the horizontal axis 34A to provide the vertical scrolling inputs employed in conjunction with the variant component 1072, and also can be rotated about the vertical axis 34B to provide the horizontal scrolling inputs that are employed in conjunction with the variant component 1064A. The track ball 32 thus could provide appropriate navigational, strolling, selection, and other inputs depending upon the needs of the routine 44 active at any time on the handheld electronic device 4. The track ball 32 enables such navigational, strolling, selection, and other inputs to be intuitively generated by the user through rotations of the track ball 32 in directions appropriate to the active routine 44, such as might be indicated on the display 18.

It can further be seen from Fig. 17 that the variant component 1072A additionally includes a value 1081 that is indicative of the language into which the disambiguation routine 44 will interpret ambiguous text input. In the example depicted in Fig. 17, the language is English.

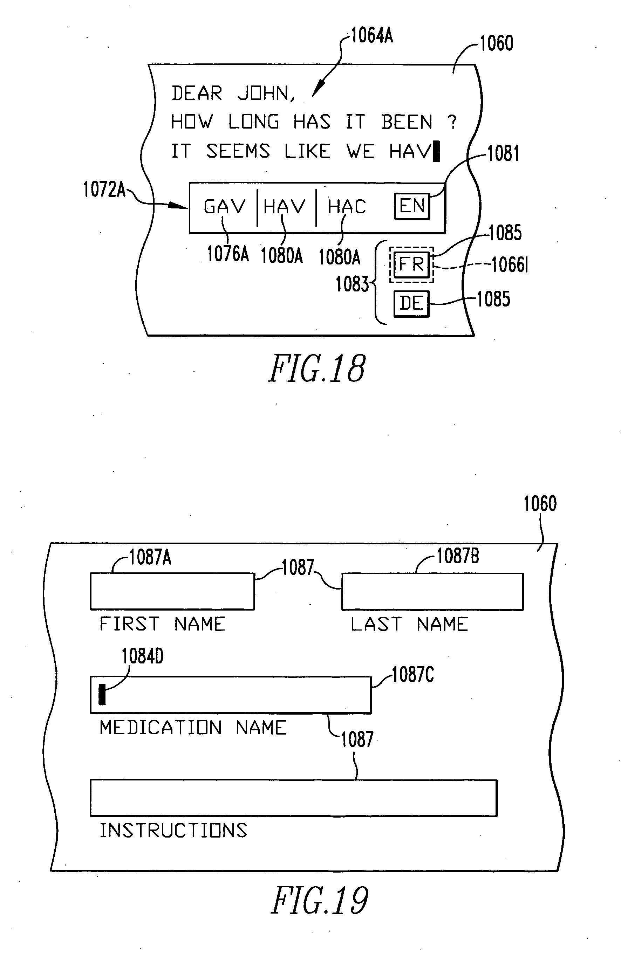

As can be seen in Fig. 18, the value 1081 can be selected by the user to cause the displaying of a list 1083 of alternative values 1085. The alternative values 1085 are indicative of selectable alternative languages into which the disambiguation routine 44 can interpret ambiguous input. A selection of the value 1081 would have been achieved, for example, by the user providing horizontal scrolling inputs with the track ball 32 to cause (not expressly depicted herein) the indicator 1066 to be disposed over the value 1081, and by thereafter translating the track ball 32 toward the housing 6 to provide a selection input.

The alternative values 1085 in the list 1083 are vertically arranged with respect to one another and with respect to the value 1081. As such, a vertical scrolling input with the track ball 32 can result in a vertical movement of the indicator 1066I to a position on one of the alternative values 1085 which, in the present example, is the alternative value 1085 "FR", which is representative of the French language. The alternative value 1085 "FR" could become selected by the user in any of a variety of fashions, such as by actuating the track ball 32 again, by continuing to enter text, or in other fashions. It thus can be understood from Fig. 17 and Fig. 18 that the track ball 32 can be rotated to provide horizontal scrolling inputs and, when appropriate, to additionally provide vertical scrolling inputs and, when appropriate, to additionally provide selection inputs, for example.

Fig. 19 depicts another exemplary output on the display 18 such as might be employed by a data entry routine 44. The exemplary output of Fig. 19 comprises a plurality of input fields 1087 with corresponding descriptions. A cursor 1084D, when disposed within one of the input fields 1087, indicates to the user that an input focus of the handheld electronic device 4 is on that input field 1087. That is, data such as text, numbers, symbols, and the like, will be entered into whichever input field 1087 is active, i.e., is the subject of the input focus. It is understood that the handheld electronic device 4 might perform other operations or take other actions depending upon which input field 1087 is the subject of the input focus.

Navigational inputs from the track ball 32 advantageously enable the cursor 1084D, and thus the input focus, to be switched, i.e., shifted, among the various input fields 1087. For example, the input fields 1087 could include the input fields 1087A, 1087B, and 1087C. Fig. 19 depicts the cursor 1084D as being disposed in the input field 1087C, indicating that the input field 1087C is the subject of the input focus of the handheld electronic device 4. It is understood that the cursor 1084D, and thus the input focus, can be shifted from the input field 1087C to the input field 1087A, which is disposed adjacent and vertically above the input field 1087C, by providing a vertical scrolling input in the upward direction with the track ball 32. That is, the track ball 32 would be rotated the predetermined rotational distance about the horizontal axis 34. Similarly, the cursor 1084D, and thus the input focus, can be shifted from the input field 1087A to the input field 1087B, which is disposed adjacent and to the right of the input field 1087A, by providing a horizontal scrolling input to the right with the track ball 32. That is, such a horizontal scrolling input could be provided by rotating the track ball the predetermined rotational distance about the vertical axis 34B. It thus can be seen that the track ball 32 is rotatable in a plurality of directions about a plurality axes to provide navigational, scrolling, and other inputs in a plurality of directions among a plurality of input fields 1087. Other types of inputs and/or inputs in other applications will be apparent.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended.

## Claims

1. A keypad (24, 224, 424) for a handheld electronic device (4, 204, 404), the keypad comprising:
a first keypad portion (48, 248, 448) comprising a plurality of first keys (52, 252), at least some of the first keys being disposed in a first plane (84), at least some of the first keys being disposed along an arcuate boundary (80) of the first keypad portion;
a second keypad portion (56, 256, 456) comprising a plurality of second keys (62);
a number of the second keys being movable along a path of movement between a first position with respect to the first keypad portion and a second position with respect to the first keypad portion, at least a portion of the path of movement comprising an arcuate path within a second plane (88), at least a portion of the arcuate path extending along at least a portion of the arcuate boundary, the first and second planes being at least one of parallel and coplanar; and
at least some of the number of second keys being disposed adjacent one another and in the second position being disposed adjacent and coplanar with at least some of the first keys.

2. The keypad of Claim 1 wherein the first keys are arranged in a number of rows (66) and/or a number of columns (72, 272), the at least some of the number of second keys being arranged in a first row and/or a first column (76) which in the second position is disposed adjacent a first row of the first keys and/or a first column of the first keys.

3. The keypad of Claim 2 wherein the first keys are arranged in a plurality of rows, at least some of the second keys in the second position being aligned with at least some of the plurality of rows.

4. The keypad of Claim 1 wherein the arcuate path is an arc of fixed radius that subtends an angle of less than ninety degrees.

5. The keypad of Claim 1 wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, the path of movement and the another path of movement being disposed at opposite sides of the first keypad portion.

6. The keypad of Claim I wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, the path of movement from the first position toward the second position being in a direction about the first keypad portion opposite to that of the another path of movement from the another first position toward the another second position.

7. The keypad of Claim 1 wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, wherein the first keys are arranged in a plurality of first columns, wherein the number of second keys in the second position are arranged in a number of second columns, and wherein the another number of second keys in the second position are arranged in another number of second columns, the number of second columns and the another number of second columns being unequal in quantity.

8. The keypad of Claim 1 wherein the first keys are arranged in a plurality of first columns (272), and wherein the second keys in the second position are arranged in a plurality of second columns (276), the second columns being at least equal in quantity to the first columns.

9. The keypad of Claim 1 comprising a bias (112) for biasing the second keypad portion toward the first position or for biasing the second keypad portion toward the second position depending on a rotational position of the second keypad portion.

10. A handheld electronic device (4, 204, 404) comprising:
a processor apparatus (16) comprising a processor (36) and a memory (40);
an input apparatus (8) structured to provide input to the processor apparatus;
an output apparatus (12) structured to receive output signals from the processor apparatus;
a housing (6) upon which at least a portion of each of the processor apparatus, the input apparatus, and the output apparatus are disposed;
the input apparatus comprising a keypad (24, 224, 424) according to claim 1.

11. The handheld electronic device of Claim 10 wherein at least a portion of the second keypad portion in the second position protrudes outwardly beyond a lateral surface (128, 132) of the housing, the at least portion of the second keypad in the first position being one of flush with the lateral surface and inboard of the lateral surface.

12. The handheld electronic device of Claim 10 wherein the first keys are arranged in a number of rows (66) and/or a number of columns (72, 272), the at least some of the number of second keys being arranged in a first row and/or a first column (76, 276) which in the second position is disposed adjacent a first row of the first keys and/or a first column of the first keys.

13. The handheld electronic device of Claim 12 wherein the first keys are arranged in a plurality of rows, at least some of the second keys in the second position being aligned with at least some of the plurality of rows.

14. The handheld electronic device of Claim 10 wherein the arcuate path is an arc of fixed radius that subtends an angle of less than ninety degrees.

15. The handheld electronic device of Claim 10 wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, the path of movement and the another path of movement being disposed at opposite sides of the first keypad portion.

16. The handheld electronic device of Claim 10 wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, the path of movement from the first position toward the second position being in a direction about the first keypad portion opposite to that of the another path of movement from the another first position toward the another second position.

17. The handheld electronic device of Claim 10 wherein another number of the second keys are movable along another path of movement between another first position with respect to the first keypad portion and another second position with respect to the first keypad portion, at least a portion of the another path of movement comprising another arcuate path within the second plane, at least some of the another number of second keys being disposed adjacent one another and in the second position being disposed adjacent at least some of the first keys, wherein the first keys are arranged in a plurality of first columns, wherein the number of second keys in the second position are arranged in a number of second columns, and wherein the another number of second keys in the second position are arranged in another number of second columns, the number of second columns and the another number of second columns being unequal in quantity.

18. The handheld electronic device of Claim 10 wherein the first keys are arranged in a plurality of first columns (72, 272), and wherein the second keys in the second position are arranged in a plurality of second columns (76, 276), the second columns being at least equal in quantity to the first columns.

## Patentansprüche

1. Tastatur (24, 224, 424) für eine handgehaltene bzw. tragbare elektronische Vorrichtung (4, 204, 404), wobei die Tastatur aufweist:
einen ersten Tastaturteil (48, 248, 448), der eine Vielzahl von ersten Tasten (52, 252) aufweist, wobei zumindest einige der ersten Tasten in einer ersten Ebene (84) angeordnet sind, wobei zumindest einige der ersten Tasten entlang einer bogenförmigen Begrenzung (80) des ersten Tastaturteils angeordnet sind;
einen zweiten Tastaturteil (56, 256, 456), der eine Vielzahl von zweiten Tasten (62) aufweist;
wobei eine Anzahl der zweiten Tasten verschiebbar ist entlang eines Verschiebepfads zwischen einer ersten Position in Bezug auf den ersten Tastaturteil und einer zweiten Position in Bezug auf den ersten Tastaturteil,
wobei zumindest ein Teil des Verschiebepfads einen bogenförmigen Pfad innerhalb einer zweiten Ebene (88) aufweist, wobei zumindest ein Teil des bogenförmigen Pfads sich entlang zumindest eines Teils der bogenförmigen Begrenzung erstreckt, wobei die ersten und zweiten Ebenen zumindest eines sind aus parallel und koplanar; und
wobei zumindest einige der Anzahl von zweiten Tasten aneinander angrenzend angeordnet sind und in der zweiten Position angrenzend und
koplanar zu zumindest einigen der ersten Tasten angeordnet sind.

2. Tastatur gemäß Anspruch 1, wobei die ersten Tasten in einer Anzahl von Zeilen (66) und/oder einer Anzahl von Spalten (72, 272) angeordnet sind, wobei zumindest einige der zweiten Tasten in einer ersten Zeile (66) und/oder einer ersten Spalte (76) angeordnet sind, die in der zweiten Position angrenzend an eine erste Zeile der ersten Tasten und/oder eine erste Spalte der ersten Tasten angeordnet sind.

3. Tastatur gemäß Anspruch 2, wobei die ersten Tasten in einer Vielzahl von Zeilen angeordnet sind, wobei zumindest einige der zweiten Tasten in der zweiten Position mit zumindest einigen der Vielzahl von Zeilen ausgerichtet sind.

4. Tastatur gemäß Anspruch 1, wobei der bogenförmige Pfad ein Bogen mit festem Radius ist, der einen Winkel von weniger als neunzig Grad schneidet.

5. Tastatur gemäß Anspruch 1, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil verschiebbar ist, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei der Verschiebepfad und der andere Verschiebepfad an gegenüberliegenden Seiten des ersten Tastaturteils angeordnet sind.

6. Tastatur gemäß Anspruch 1, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil verschiebbar ist, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei der Verschiebepfad von der ersten Position zu der zweiten Position in einer Richtung über den ersten Tastaturteil entgegengesetzt ist von dem des anderen Verschiebepfads von der anderen ersten Position zu der anderen zweiten Position.

7. Tastatur gemäß Anspruch 1, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil verschiebbar ist, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei die ersten Tasten in einer Vielzahl von ersten Spalten angeordnet sind, wobei die Anzahl von zweiten Tasten in der zweiten Position in einer Anzahl von zweiten Spalten angeordnet sind, und wobei die andere Anzahl von zweiten Tasten in der zweiten Position in einer anderen Anzahl von zweiten Spalten angeordnet sind, wobei die Anzahl von zweiten Spalten und die andere Anzahl von zweiten Spalten in der Menge ungleich sind.

8. Tastatur gemäß Anspruch 1, wobei die ersten Tasten in einer Vielzahl von ersten Spalten (272) angeordnet sind und wobei die zweiten Tasten in der zweiten Position in einer Vielzahl von zweiten Spalten (276) angeordnet sind, wobei die zweiten Spalten in der Menge zu den ersten Spalten zumindest gleich sind.

9. Tastatur gemäß Anspruch 1, die ein Bias-Mittel (112) aufweist zum Beeinflussen des zweiten Tastaturteils hin zu der ersten Position oder zum Beeinflussen des zweiten Tastaturteils hin zu der zweiten Position abhängig von einer Drehposition des zweiten Tastaturteils.

10. Handgehaltene bzw. tragbare elektronische Vorrichtung (4, 204, 404), die aufweist:
eine Prozessorvorrichtung (16), die einen Prozessor (36) und einen Speicher (40) aufweist;
eine Eingabevorrichtung (8), die strukturiert ist, eine Eingabe an die Prozessorvorrichtung zu liefern;
eine Ausgabevorrichtung (12), die strukturiert ist, Ausgabesignale von der Prozessorvorrichtung zu empfangen;
ein Gehäuse (6), an dem zumindest ein Teil jeweils der Prozessorvorrichtung, der Eingabevorrichtung und der Ausgabevorrichtung angeordnet sind;
wobei die Eingabevorrichtung eine Tastatur (24, 224, 424) gemäß Anspruch 1 aufweist.

11. Tragbare elektronische Vorrichtung gemäß Anspruch 10, wobei zumindest ein Teil des zweiten Tastaturteils in der zweiten Position nach außen über eine Seitenfläche (128, 132) des Gehäuses hinaus ragt, wobei zumindest der Teil der zweiten Tastatur in der ersten Position eines ist aus bündig mit der Seitenfläche und innerhalb der Seitenfläche.

12. Tragbare elektronische Vorrichtung gemäß Anspruch 10, wobei die ersten Tasten in einer Anzahl von Zeilen (66) und/oder einer Anzahl von Spalten (72, 272) angeordnet sind, wobei zumindest einige der Anzahl von zweiten Tasten in einer ersten Zeile und/oder einer ersten Spalte (76, 276) angeordnet sind, die in der zweiten Position angrenzend an eine erste Zeile der ersten Tasten und/oder einer ersten Spalte der ersten Tasten angeordnet ist.

13. Tragbare elektronische Vorrichtung gemäß Anspruch 12, wobei die ersten Tasten in einer Vielzahl von Zeilen angeordnet sind, wobei zumindest einige der zweiten Tasten in der zweiten Position mit zumindest einigen der Vielzahl von Zeilen ausgerichtet sind.

14. Tragbare elektronische Vorrichtung gemäß Anspruch 10, wobei der bogenförmige Pfad ein Bogen mit festem Radius ist, der einen Winkel von weniger als neunzig Grad schneidet.

15. Tragbare elektronische Vorrichtung gemäß Anspruch 10, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil bewegbar ist, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei der Verschiebepfad und der andere Verschiebepfad an gegenüberliegenden Seiten des ersten Tastaturteils angeordnet sind.

16. Tragbare elektronische Vorrichtung gemäß Anspruch 10, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil verschiebbar sind, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei der Verschiebepfad von der ersten Position in Richtung zu der zweiten Position in eine Richtung über den ersten Tastaturteil ist, entgegen der des anderen Verschiebepfads von der anderen ersten Position in Richtung zu der anderen zweiten Position.

17. Tragbare elektronische Vorrichtung gemäß Anspruch 10, wobei eine andere Anzahl der zweiten Tasten entlang eines anderen Verschiebepfads zwischen einer anderen ersten Position in Bezug auf den ersten Tastaturteil und einer anderen zweiten Position in Bezug auf den ersten Tastaturteil verschiebbar sind, wobei zumindest ein Teil des anderen Verschiebepfads einen anderen bogenförmigen Pfad innerhalb der zweiten Ebene aufweist, wobei zumindest einige der anderen Anzahl von zweiten Tasten aneinander angrenzend angeordnet sind und in der zweiten Position angrenzend an zumindest einige der ersten Tasten angeordnet sind, wobei die ersten Tasten in einer Vielzahl von ersten Spalten angeordnet sind, wobei die Anzahl von zweiten Tasten in der zweiten Position in einer Anzahl von zweiten Spalten angeordnet sind, und wobei die andere Anzahl von zweiten Tasten in der zweiten Position in einer anderen Anzahl von zweiten Spalten angeordnet sind, wobei die Anzahl von zweiten Spalten und die andere Anzahl von zweiten Spalten in der Menge ungleich sind.

18. Tragbare elektronische Vorrichtung gemäß Anspruch 10, wobei die ersten Tasten in einer Vielzahl von ersten Spalten (72, 272) angeordnet sind und wobei die zweiten Tasten in der zweiten Position in einer Vielzahl von zweiten Spalten (76, 276) angeordnet sind, wobei die zweiten Spalten in der Menge zu den ersten Spalten zumindest gleich sind.

## Revendications

1. Clavier (24, 224, 424) pour dispositif électronique portable (4, 204, 404), le clavier comprenant :
une première partie de clavier (48, 248, 448) comprenant une pluralité de premières touches (52, 252), au moins certaines des premières touches étant disposées dans un premier plan (84), au moins certaines des premières touches étant disposées le long d'une limite incurvée (80) de la première partie de clavier ;
une deuxième partie de clavier (56, 256, 456) comprenant une pluralité de deuxièmes touches (62) ;
un certain nombre des deuxièmes touches étant mobiles le long d'un trajet de mouvement entre une première position par rapport à la première partie de clavier et une deuxième position par rapport à la première partie de clavier, au moins une partie du trajet de mouvement comprenant un trajet incurvé dans un deuxième plan (88), au moins une partie du trajet incurvé s'étendant le long d'au moins une partie de la limite incurvée, les premier et deuxième plans étant au moins l'un de plans parallèles et coplanaires l'un par rapport à l'autre ; et
au moins certaines du nombre de deuxièmes touches étant disposées à proximité immédiate l'une de l'autre et, à la deuxième position, étant disposées à proximité immédiate et de façon coplanaire par rapport à certaines des premières touches.

2. Clavier selon la revendication 1, dans lequel les premières touches sont agencées dans un certain nombre de lignes (66) et/ou un certain nombre de colonnes (72, 272), les au moins certaines du nombre de deuxièmes touches étant agencées dans une première ligne et/ou une première colonne (76) qui, à la deuxième position, est disposée à proximité immédiate d'une première ligne des premières touches et/ou d'une première colonne des premières touches.

3. Clavier selon la revendication 2, dans lequel les premières touches sont agencées dans une pluralité de lignes, au moins certaines des deuxièmes touches, à la deuxième position, étant alignées avec au moins certaines de la pluralité de lignes.

4. Clavier selon la revendication 1, dans lequel le trajet incurvé est un arc de rayon fixe qui sous-tend un angle inférieur à quatre-vingt-dix degrés.

5. Clavier selon la revendication 1, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, le trajet de mouvement et l'autre trajet de mouvement étant disposés sur des côtés opposés de la première partie de clavier.

6. Clavier selon la revendication 1, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, le trajet de mouvement depuis la première position vers la deuxième position s'effectuant dans une direction qui, par rapport à la première partie de clavier, est opposée à celle de l'autre trajet de mouvement depuis l'autre première position vers l'autre deuxième position.

7. Clavier selon la revendication 1, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, dans lequel les premières touches sont agencées dans une pluralité de premières colonnes, dans lequel le nombre de deuxièmes touches, à la deuxième position, sont agencées dans un certain nombre de deuxièmes colonnes, et dans lequel l'autre nombre de deuxièmes touches, à la deuxième position, sont agencées dans un autre nombre de deuxièmes colonnes, le nombre de deuxièmes colonnes et l'autre nombre de deuxièmes colonnes ayant des valeurs inégales.

8. Clavier selon la revendication 1, dans lequel les premières touches sont agencées dans une pluralité de premières colonnes (272) et dans lequel les deuxièmes touches, à la deuxième position, sont agencées dans une pluralité de deuxièmes colonnes (276), les deuxièmes colonnes étant en quantité au moins égales à celle des premières colonnes.

9. Clavier selon la revendication 1, comprenant un dispositif de rappel (111) pour repousser la deuxième partie de clavier vers la première position ou pour repousser la deuxième partie de clavier vers la deuxième position en fonction d'une position de rotation de la deuxième partie de clavier.

10. Dispositif électronique portable (4, 204, 404) comprenant :
un appareil à processeur (16) comprenant un processeur (36) et une mémoire (40) ;
un appareil d'entrée (8) conçu pour fournir une entrée à l'appareil à processeur ;
un appareil de sortie (12) conçu pour recevoir des signaux de sortie de l'appareil à processeur ;
un boîtier (6) sur lequel est disposée au moins une partie de chacun de l'appareil à processeur, de l'appareil d'entrée et de l'appareil de sortie ;
l'appareil d'entrée comprenant un clavier (24, 224, 424) selon la revendication 1.

11. Dispositif électronique portable selon la revendication 10, dans lequel au moins une partie de la deuxième partie de clavier, à la deuxième position, fait saillie vers l'extérieur au-delà d'une surface latérale (128, 132) du boîtier, l'au moins une partie du deuxième clavier, à la première position, étant soit de niveau avec la surface latérale, soit vers l'intérieur de la surface latérale.

12. Dispositif électronique portable selon la revendication 10, dans lequel les premières touches sont agencées dans un certain nombre de lignes (66) et/ou un certain nombre de colonnes (72, 272), les au moins certaines du nombre de deuxièmes touches étant agencées dans une première ligne et/ou une première colonne (76, 276) qui, à la deuxième position, est disposée à proximité immédiate d'une première ligne des premières touches et/ou d'une première colonne des premières touches.

13. Dispositif électronique portable selon la revendication 12, dans lequel les premières touches sont agencées dans une pluralité de lignes, au moins certaines des deuxièmes touches, à la deuxième position, étant alignées avec au moins certaines de la pluralité de lignes.

14. Dispositif électronique portable selon la revendication 10, dans lequel le trajet incurvé est un arc de rayon fixe qui sous-tend un angle inférieur à quatre-vingt-dix degrés.

15. Dispositif électronique portable selon la revendication 10, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, le trajet de mouvement et l'autre trajet de mouvement étant disposés sur des côtés opposés de la première partie de clavier.

16. Dispositif électronique portable selon la revendication 10, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, le trajet de mouvement depuis la première position vers la deuxième position s'effectuant dans une direction qui, par rapport à la première partie de clavier, est opposée à celle de l'autre trajet de mouvement depuis l'autre première position vers l'autre deuxième position.

17. Dispositif électronique portable selon la revendication 10, dans lequel un autre nombre des deuxièmes touches sont mobiles le long d'un autre trajet de mouvement entre une autre première position par rapport à la première partie de clavier et une autre deuxième position par rapport à la première partie de clavier, au moins une partie de l'autre trajet de mouvement comprenant un autre trajet incurvé dans le deuxième plan, au moins certaines de l'autre nombre de deuxièmes touches étant disposées à proximité immédiate les unes des autres et, à la deuxième position, étant disposées à proximité immédiate d'au moins certaines des premières touches, dans lequel les premières touches sont agencées dans une pluralité de premières colonnes, dans lequel le nombre de deuxièmes touches, à la deuxième position, sont agencées dans un certain nombre de deuxièmes colonnes, et dans lequel l'autre nombre de deuxièmes touches, à la deuxième position, sont agencées dans un autre nombre de deuxièmes colonnes, le nombre de deuxièmes colonnes et l'autre nombre de deuxièmes colonnes ayant des valeurs inégales.

18. Dispositif électronique portable selon la revendication 10, dans lequel les premières touches sont agencées dans une pluralité de premières colonnes (72, 272) et dans lequel les deuxièmes touches, à la deuxième position, sont agencées dans une pluralité de deuxièmes colonnes (76, 276), les deuxièmes colonnes étant en quantité au moins égales à celle des premières colonnes.
